# EUROPEAN PATENT APPLICATION

(11) **EP 1 316 434 A2**
(43) Date of publication of application: **04.06.2003**
(21) Application number: 02080051.2
(22) Date of filing: 03.12.2002
(51) Int. Cl.: B41M 5/00, B41M 7/00

(54) **Process for making weather proof and chemical-resistant outdoor signs and signs made thereby**

(30) Priority: 03.12.2001 GB 0128905; 12.06.2002 GB 0213473
(71) Applicant: Trip Industries Holding B.V., 2161 LE Lisse (NL)
(72) Inventor: van Heijningen, Dick, 2161 LE Lisse (NL); Biervliet, Monty, 2161 LE Lisse (NL)
(74) Representative: Bailey, David Martin

(57) **Abstract**

The invention relates to a process for making weatherproof and chemical-resistant outdoor signs, and signs made thereby. The process of the invention is especially useful for producing vehicle registration, or licence, plates. In one aspect, the method described comprises: providing a substrate having a first, retro-reflective, face suitable for receiving printed indicia and a second face suitable for fixing to a support surface; forming an ink-receptive receiving surface on said first face, said surface being absorbent towards ink used for printing said indicia; forming indicia on said coating by printing on said surface; causing the ink to cure or dry; and laminating the printed first face with at least one light-transmissive layer. In another aspect, the method comprises: providing a substrate having a first, retro-reflective face and a second face suitable for fixing to a support surface; providing a transparent layer and forming on said layer an ink-receptive receiving surface which is absorbent towards the ink used for printing the indicia; printing the indicia on the receiving surface, and laminating the transparent layer to the first face of the substrate so that the printed indicia are disposed between the substrate and the transparent layer. There are also described signs for outdoor use comprising a substrate having a first, retro-reflective face and a second face suitable for fixing to a support surface, said first face carrying printed indicia formed by printing an ink onto an ink-receptive receiving surface and said substrate being laminated to a light-transmissive layer with the indicia disposed between the substrate and the light-transmissive layer, the ink-receptive surface having absorbed the ink which forms the indicia into the surface.

## Description

The invention relates to a process for making weatherproof and chemical-resistant outdoor signs, and signs made thereby. More particularly, the invention relates to a process for making weatherproof and chemical-resistant outdoor signs by utilising inkjet technology, and to signs made thereby.

The process of the invention is especially useful for producing vehicle registration, or licence, plates.

It is known in the art of manufacturing vehicle registration plates and other outdoor signs to employ techniques such as embossing indicia directly onto a typically aluminium plate provided with a reflection layer, or such as thermo-transfer from a ribbon coated with a release coating carrying inked indicia that are mechanically transferred under heat on to a reflection foil, or directly onto the reflection layer of an aluminium plate.

Also known are transfer processes wherein indicia are formed on a transfer sheet having a release coating by, for example, a screen printing process, and are then transferred to a reflection foil which is laminated to provide the weatherproof finish.

The prior art processes for manufacturing outdoor signs suffer from some drawbacks which are addressed by the process of the present invention. The prior art processes do not lend themselves well to a high volume of short run manufacture of outdoor signs, such as vehicle registration plates or so-called "local direction" road signs. Prior art processes also commonly require a skilled workforce to carry them out. Processes which involve the use of transfers also have the disadvantage that a large stock of transfers needs to be maintained at the site where the signs are produced.

It is an object of the invention to provide a fully continuous, high speed, process for producing weatherproof and chemically resistant assigns which has a wide range of applications. The process of the invention creates indicia, including text on synthetic materials such as retro-reflective sheeting by printing, especially by inkjet printing. It is an object of the invention that the signs produced by the process have a consistent high quality of finish, particularly where indicia are printed onto synthetic retro-reflective sheeting.

According to one aspect of the invention there is provided a method of producing signs for outdoor use, the method comprising:
providing a substrate having a first, retro-reflective, face suitable for receiving printed indicia and a second face suitable for fixing to a support surface;
forming an ink-receptive receiving surface on said first face, said receiving surface being absorbent towards ink used for printing said indicia;
forming indicia on said receiving surface by printing on said surface;
causing the ink to cure or dry; and
laminating the printed first face with at least one light-transmissive layer.
According to a second aspect of the invention there is provided a method for producing signs for outdoor use in which indicia are printed in an ink, the method comprising:
providing a substrate having a first, retro-reflective face and a second face suitable for fixing to a support surface;
providing a transparent layer and forming on said layer an ink-receptive receiving surface which is absorbent towards the ink used for printing the indicia;
printing the indicia on the receiving surface, and laminating the transparent layer to the first face of the substrate so that the printed indicia are disposed between the substrate and the transparent layer.

The invention also includes a sign for outdoor use comprising: a substrate having a first, retro-reflective face and a second face suitable for fixing to a support surface, said first face carrying printed indicia formed by printing an ink onto an ink-receptive receiving surface and said substrate being laminated to a light-transmissive layer with the indicia disposed between the substrate and the light-transmissive or transparent layer, the ink-receptive surface having absorbed the ink which forms the indicia into the surface.

The indicia may be disposed directly between the substrate and the light-transmissive or transparent layer or there may be additional intermediate layers.

Preferably, the indicia are printed using an inkjet printing head. The use of printing apparatus (which includes X-Y plotters) in which the image of the sign is produced *in situ* avoids the need for the sign maker (e.g. a garage in the case of vehicle registration plates) to maintain a stock of transfers.

Preferably, the ink-receptive receiving surface is formed by deposition of an ink-receptive receiving coating. Suitably, such an ink-receptive receiving coating is deposited upon the substrate or transparent layer following a treatment of said substrate or layer by a flame or corona discharge treatment. Such treatment is advantageous in promoting adhesion of the receiving coating on the substrate or transparent layer, particularly adhesion to polyethylene materials.

Alternatively, the ink-receptive receiving surface may be formed by a treatment directly on the substrate or transparent layer. Examples include flame or corona discharge treatments and are particularly suitable when using uv-curable inks.

The ink-receptive receiving surface may have a tacky surface or one which is rendered tacky by application of a tackifying agent and the tacky exposed surface of the receiving surface may be employed to bond the printed retro-reflective substrate to the protective layer.

Because the ink-receptive receiving surface is absorbent towards at least some of the components of the ink, the printed indicia are absorbed into the surface of the receiving surface. As a result, the surfaces of the indicia and of the receiving coating become essentially coplanar. This avoids a common problem associated with indicia formed by transfers and thermo-ribbon printing in which the upstanding edge or perimeter of an image can produce a halo effect when laminated to an acrylic protective layer.

The inks used for printing onto the receiving surface may be water- or solvent-based or may rely on a non-volatile flowable component such as an oil or liquid binder component which are absorbed into the cured receiving surface.

An ink-receptive receiving coating should contain at least one component which absorbs the pigment, dyes and/or solvent present in the ink and will therefore be dependent upon the nature of the ink. Preferably, the coating composition contains a binder having these properties. Polyvinyl pyrrolidone (PVP), cellulose derivatives and polyvinyl acetate are suitable candidates for the binder component of the coating, since these have good solvent and water uptake properties and also absorb pigments and dyes used in inkjet inks. It will be appreciated that the coating need not be wholly absorbent of the ink, although this is preferred.

Retro-reflective sheeting materials are commercially available and typically comprise a supporting substrate, e.g. of polyester, alkyd or acrylic coated with microbeads of glass embedded in a resin bed. The preparation of retro-reflective sheeting is described, for example, in US Patents 4511210; 4569920 and 4767659.

The ink-receptive receiving surface is typically 20 to 60µ thick, e.g. about 40µ thick. Retro-reflective sheet materials used for the purposes of this invention may be about 50 to 120µ thick. The protective layer may be a sheet, e.g. of acrylic material about 2 to 5 mm thick, preferably 2-3mm. However, this will obviously depend upon each user's particular requirements. Adhesive may be applied to the protective layer to laminate to the retro-reflective sheet in a thickness of about 40 gram/square metre. Alternatively, double-sided adhesive tape may be used.

One or more inks may be used to form indicia which can form a monochrome or polychrome image.

The substrate may be provided in sheet or web form. In the latter case, the process further comprises providing means for cutting the web to form signs of predetermined size. The form in which the substrate is supplied will depend largely upon the volume of signs being handled by a particular user.

Yet further preferred embodiments of the invention employ an inkjet printing head under computer control.

The invention will now be described by way of non-limiting example only, with reference to the accompanying drawings, of which:-
Figure 1 is a schematic representation of apparatus for performing the invention;
Figure 2 is a representation of a first embodiment of a sign according to the invention in plan view;
Figure 3 is a cross-section through line A-A and
Figure 4 is a similar cross-sectional view to that of Figure 3 through a second embodiment of a sign in accordance with the present invention.

A process for producing weatherproof and chemical-resistant signs for outdoor use comprises printing indicia onto a synthetic substrate by utilising inkjet technology.

With specific inkjet inks, for example, UV curable inkjet inks and some solvent-based inkjet inks, indicia may be printed directly onto the substrate. In the case of an UV curable ink, curing is typically by a UV light source such as a UV lamp. Other inkjet inks such as those based on some solvents, based on oil, or based on water, require a receiver layer to be provided on the "printing" side of the substrate, that is to say the face of the substrate which is to display the indicia.

Furthermore, it was also found that two component inks can be used when one of the curing components is embedded into the receiving layer. For example, trifunctional polymercaptan SP232 (Akzo Nobel) an epoxy based inkjet resin can be used. Suitably, an unsaturated acrylic-based inkjet ink can be cured by, for example, a peroxide (or similar radical splitting-off component) as a curing agent in the receiving layer.

The ink-receptive receiving layer is a transparentising medium and may comprise a UV curable resin. UV curable formulations typically contain oligomers, reactive diluents, photoinitiators and additives. The oligomers may include epoxy acrylates such as Bisphenol A epoxy acrylate, polyester acrylates such as tetrafunctional polyester acrylate, or unsaturated resins such as full acrylic resin. Functional, which may be mono-, di-, tri-, or polyfunctional, acrylates, including isobornyl acrylate (IBOA), 1,6-hexamediol diacrylate (HDDA), triethylene glycol diacrylate (TIEGDA) and trimethylolpropane triacrylate (TMPTA) are suitable diluting monomers for use in UV curable formulations. But also other unsaturated compounds such as methacrylate and acryloamide compounds in combination with other cross-linking agents such as peroxide are suitable.

Preferred photoinitiators for formulations of the present invention include 2-benzyl-2-dimethylamino-1-(4-morpholinophenyl)-butanone-1 and 2-hydroxy-2-methylpropiophenone, available as Irgacure ® 369 and Irgacure ® 1173 from Ciba Speciality Chemicals PLC of Macclesfield, Cheshire.

The receiving coating is based on one or more hydrophilic or non-hydrophilic transparent binder material or materials depending upon the nature of the ink used. One such suitable material suitable for aqueous inks, although those skilled in the art will be able to conceive of others, is polyvinylpyrrolidone (PVP). PVP is available commercially in a number of weight average molecular weights (M_{w}) ranging from about 10000 gmol⁻¹ to about 1300000 gmol⁻¹. For the present invention, PVP having M_{w} in the range of about 55000 to about 630000 gmol⁻¹ is preferred. PVP is available from ISP Europe of Guildford, Surrey, under the trade names PVPK30, PVPK60 and PVPK90, which refer to the molecular weight of the polymer.

PVP has good water and solvent uptake properties and also absorbs the pigments or dyes of inkjet inks. The transparentising medium is applied to the substrate as a solution of binder material, photo-curable compounds, additives and photo initiator. But in the transparentising medium, other curing agents for binders used in two component curing formulations can be used, such as peroxides, metal compounds, proton generators and so on. The preferred solvents of the invention are propyleneglycol methylether or dipropyleneglycol methylether, manufactured by Dow Chemicals and sold under the trade names Dowanol PM and Dowanol DPM by the Dow Chemical Company Ltd. of West Drayton, Middlesex. The PVP content should be sufficient to impart good receptability of the inkjet ink or inks to the receiver layer. It has been found by the inventors that a PVP content in the range of 15-35 weight percent, based on the total formulation offers such good receptability.

The receiving coating is applied to the first face of the substrate by any one of a number of known methods. It may be applied by, for example, a roller coater, air knife, lacquer curtain or screen coating process. Other methods of applying the coating will readily suggest themselves to those skilled in the art.

Following application to the substrate, the coating is subjected to a heat treatment step to drive off the solvent. The duration and temperature should be sufficient to remove substantially all of the solvent. The coating may be force dried with a suitable heat source. For example, a mercury lamp being used as an UV source for photoinitiation can be used as the heat source if sufficient infra-red is generated. Alternatively, the solvent may be removed by drying in ambient air. The coated substrate is then exposed to UV light from a UV light source, such as a UV lamp, to promote cross-linking of the binder under the influence of a photoinitiator. The cross-linking occurs through a free radical mechanism and allows the binder material to be incorporated into a polymerised network which forms the porous receiving layer. It is the cross-linking of the binder and the photo curable components of the coating that imparts the water-resistant properties to the receiving coating.

UV cationic curing, particularly of epoxy resin provides good adhesion of the receiving coating to the substrate. It is believed that low shrinkage of epoxy resin under cure via a cationic mechanism is responsible for this. The absence of oxygen inhibition is also an advantageous feature of UV light initiated cationic chemistry.

In UV cationic curing of epoxy-based systems, aryl sulphonium salts are customarily used as the photo initiator. Irradiating the salt generates a strong acid that causes rapid opening of the epoxy ring and formation of the reaction propagating reactive cationic species. A preferred photo initiator of the invention comprises triaryl sulphonium hexafluorophosphate in a mixture also comprising propylene carbonate, a copolymerisable solvent, the mixture being useful for rapidly polymerising thin clear coatings on synthetic material.

The receiving coating solution may comprise modified cycloaliphatic epoxides, cycloaliphatic resins, cycloaliphatic di-epoxides or mixtures thereof 3,4-epoxycyclohexyl-methyl-3,4-epoxycyclohexanone carboxylate is a preferred ingredient. 3,4-epoxycyclohexyl-methyl-3,4-epoxycyclohexanone carboxylate provides good toughness, solvent resistance, and strong adhesion to a variety of substrates. Use of modified cycloaliphatic epoxide imparts flexibility and good adhesion characteristics to the receiving coating, and yields a softer film, and use of cycloaliphatic epoxide resin is also desirable for its water-proofing properties.

The receiving coating preferably also includes materials having an hydroxy functionality. Hydroxy functional components of the system cross-link with the epoxy monomers, and also act as chain transfer agents during cure. Hydroxypropylene cellulose, a modified polysaccharide, is employed as a preferred hydroxy functional compound. Glyoxal is also preferably added with the hydroxypropylene cellulose to improve cross-linking, providing a dense network with good water-proofing qualities.

The hydroxy groups of the hydroxypropylene cellulose component effect its full co-reaction in the cationic polymerisation mechanism.

The cationic polymers formed by curing the epoxy component containing receiving coating, advantageously strongly bind to the pigments and/or dyes of the inkjet inks. Although the pigments and/or dyes themselves may be neutral species, they can be covered with a surface layer of negatively charged particles which give the pigment improved wetting and dispersing properties. The surface negative charge allows the cationic polymers to bind the pigment into an insoluble salt, thereby fixing pigment to the coating layer.

UV curable inkjet inks can be formulated for weatherproof and chemical-resistant outdoor signs manufacture.

UV curable inkjet ink formulations may be based on some or all of epoxy acrylate, urethane acrylates, polyester resin, monomers, reactive diluents, photoinitiators, adhesion promoters, wetting agents and dispersing agents, defoamers, flow agents, and pigments and/or dyes. An ink for use in the invention may comprise a modified hexafunctional polyester acrylate selected for its good flow properties, excellent wetting properties and last cure response. An aliphatic urethane acrylate can be included for its good weather resistance and resistance to yellowing. Suitable monomers include one or more of isobornyl acrylate for its high glass transition temperature (T_{g}), its flexibility and its low viscosity, HDDA for its reactivity, its adhesive qualities and flexibility, and TIEGDA which possesses desirable solvency, scratch resistance and reactive qualities.

UV curable inks may also be used which do not contain any photoinitiator since a photoinitiator can be incorporated into the receiving layer.

Preferred pigments of the inks of the invention must have an optical density sufficient for forming indicia on the face of the substrate or coated substrate. A pigment having a rating of 7 on the wool scale would be sufficient. A preferred pigment dispersion is a carbon black, or pigment black 7, having a mean particle size of 0.5 µm or less and a concentration of about 5% of the formulation. As a dispersant, solvent-free non-ionic grind aid such as that sold under the trade name "Surfonyl CT-131, available from Air Products Nederland B.V. (Chemicals), of Utrecht, may be added with prevents flocculation and settling of the pigments in the ink. The oligomer epoxidised soya bean oil acrylate may be added as a pigment wetter in addition to the wetting function provided by the dispersant. Flow, slip, substrate wetting, anti-blocking and defoaming can be regulated by the presence of flow agents in the inkjet ink formulation. A suitable photo initiator is 2-benzyl-2-dimethylamino-1-(4-morpho-linophenyl)-butanone-1, either alone or with co-initiators, 1-hydroxy-cyclohexyl-phenyl-ketone or 2,2-dimethoxy-1,2-diphenylethan-1-one, or both.

The following examples further illustrate some aspects of the invention.

### EXAMPLE 1 (Multi-purpose Receiver Layer)

Two grades of polyvinyl pyrrolidone (PVP K90, ISP) (5 grams) and (PVP K30, ISP) (20 grams) were dissolved in a solvent mixture (66 grams of 70% propyleneglycol methylether (DOW PM, Dow Chemicals) and 30% triethyleneglycol diacrylate (SR 272, Cray Valley). The solution was mixed thoroughly with a stirrer until an homogeneous mixture was obtained. To this mixture was then added, respectively, aliphatic urethane diacrylate (CN966A80, Cray Valley) (5 grams) and photo initiator 2-hydroxy-2-methylpropiophenon (Irgacure ® 1173, Ciba Geigy) (4 grams). Precipitated calcium carbonate (Socal 322, Solvay) (0.5 gram) was added and stirred into the mixture until well dispersed.

The resulting composition was coated using a Mayer (wire) bar onto 75 micron polyester reflective sheeting and dried at 70°C for 1 minute. Sheeting in the range of 50 to 120 micron is equally suitable. Hereafter, the coated substrate was exposed to UV light from standard uv-light sources. A dry, ink-receptive coating was formed of about 40µm in thickness.

The coated retro-reflective substrate was imaged with an Epson (Stylus Color 640) and a Hewlett Packard (HP 11200) ink-jet printers. The standard inks of Epson and Hewlett Packard, which are water-based, were used. The coated retro-reflective substrate was also imaged with a Xaar (126) print-head using standard solvent-based inks. The resulting imaged films were evaluated for dry time, image optical density, water-resistance and overall print quality.

Copies showed excellent resolution and colour density and were essentially free from puddling. The image was a bit tacky after printing, but within one minute, the image was completely dry. The printed surface was protected by laminating to a 3mm transparent sheet of polymethyl methacrylate (PMMA). After immersing in a water bath at 293 K for 48 hours, the images were still present without loss of quality.

### EXAMPLE 2 (Multi-purpose receiver coating)

### Example 2a

Hydroxypropylene cellulose (KLUCEL E, Aqualon-Hercules) (10 grams) was dissolved in a solvent of propyleneglycol methylether (DOW PM, Dow Chemicals) (60 grams). Thereafter, respectively cycloaliphatic di-epoxide (Uvacure 1500, UCB Chemicals) (9 grams), modified cycloaliphatic epoxide (Uvacure 1533, UCB Chemicals) (2.1 grams), cycloaliphatic epoxide resin (Cat 003, UCB Chemicals) (14 grams) and triaryl sulphonium hexafluorophosphate salt (Uvacare 1590, UCB Chemicals) (1-2 grams) were added to the solution.

### Example 2b

The above composition repeated with the addition of 2g of photoinitiator CIBA DAROCUR 1173, thereby allowing printing with UV-curable inks without the need for a photoinitiator. This also avoids the need to prevent admission of ultra-violet radiation into the apparatus, which would otherwise cause premature curing of the ink and thus gumming of the apparatus.

The resulting compositions were coated using a Mayer bar onto respective 75 microns retro-reflective polyester sheets and dried at 100°C for 1 minute. Thereafter, the coated substrates were exposed to UV light. Dry, ink-receptive coatings were obtained having a dried thickness of about 40µm.

The coated, retro-reflective substrates were imaged with an Epson (Stylus Color 640) and a Hewlett Packard (HP 1120C) ink-jet printers. The standard inks of Epson and Hewlett Packard, which are water-based, were used. The coated retro-reflective substrates were also imaged with a Xaar (126) print-head using standard solvent-based inks and UV curable inks. The resulting imaged films were evaluated for dry time, image optical density, water-resistance and overall print quality.

Copies showed excellent resolution and colour density and were essentially free from puddling. The image was completely dry within 20 seconds after printing. The printed surface was protected by laminating to a transparent sheet of PMMA using a double-sided transparent adhesive tape. After immersing in a water bath at 293K for 48 hours, the images were still present on the coating. The images showed only very little or no colour changes compared with the images printed without immersing in a water bath.

### EXAMPLE 3 (Multi-purpose receiving layer)

The following examples are formulations of ink-receptive coatings developed for an ink-jet water-based ink. This water based ink-jet ink can be based on pigments or dyes. Furthermore, the ink-receptive coating has a high degree of water-resistance.

### Example 3a

Propyleneglycol methylether (DOW PM, Dow Chemicals) (48 grams) and triethyleneglycol diacrylate (SR 272, Gray valley) (20 grams) were mixed. Thereafter, 2 grades of polyvinyl pyrrolidone (PVP K90, ISP) (5 grams) and (PVP K30, ISP) (20 grams) were dissolved in the solvent mixture. The solution was mixed thoroughly with a stirrer until a homogeneous mixture appeared. To this mixture was then added respectively aliphatic urethane diacrylate (CN966A80, Gray valley) (5 grams), UV adhesion promoter (JAGOLUX UV9240T, Jager Chemicals) (5 grams), 1.6-Hexanediol diacrylate (HDDA) (SR 233, Gray valley) (5 grams), Trimethylene P triacrylate (TMPTA) (UCB Chemicals) (5 grams), UV adhesion monomer mixture (IRR 84, UCB Chemicals) (2 grams). Finally, photo initiator 2-hydroxy-2-methylpropiophenon (Irgacure 1173, Ciba Geigy) (4 grams) and Irgacure 500. (Ciba Geigy) (2 grams) were added to the mixture. Thereafter, the mixture was well stirred and dispersed until a homogeneous solution exists.

The composition was coated with a Mayer bar on a retro-reflective sheeting and oven dried at 70°C for 5 minutes. Drying with air is equally suitable. The coated substrate was then cross-linked by exposure to UV light. The cured coating had a thickness of 12 microns.

### Example 3b

The composition of Example 3a was repeated with the substitution of benzyl peroxide (4g) for the photoinitiator, thus providing a UV light, rather than UV, curable composition.

Dried films were imaged with Epson (Stylus Color 640) and a Hewlett Packard (HP 11200) ink-jet printers. The standard inks of Epson (water-based; black ink and CMY inks are based on dyes) and Hewlett Packard (water-based; black pigmented ink and colorants are based on dyes) were used. The coated retro-reflective sheeting was also imaged with a Xaar (126) print-head using standard solvent-based inks. The resulting imaged films were evaluated for dry time, image optical density and overall print quality.

The printed text was instantly dry. The printed text showed good flow behaviour that resulted in good intense black coloured image/text and sharp images. The coating absorbed the black pigment particles very well and even a finger rub test did not smear the printed text. The coating was flexible but with a hard surface and a good adhesion to the surface of the ink-jet printers. The transparency was very good. There was no static electricity nor was there surface tension of any influence. After lamination with an acrylic protective layer, the coating with images/text was waterproof even after immersing in a water bath for 24 hours (room temperature). This coating layer showed good adhesion on other synthetic sheet materials and retro-reflective sheets.

### EXAMPLE 4 (UV-curable inkjet ink).

In a brown beaker glass, black pigment 7 (Microlith black C-K, Ciba-Geigy) (3 grams) was dissolved in a solvent mixture (66.6 grams of 13.8% Triethylene glycol diacrylate (TIEGDA) (SR 272, Cray Valley), 36.4% Isobornyl acrylate (IBOA, UCB Chemicals), and 21.0%, 1,6-Hexanediol diacrylate (HDDA) (SR 238, Cray Valley). The mixture was continuously stirred at low speed. Thereafter, solvent-free 100% active cross-linking additive (Tego-Rad 2200, Tego Chemie) (5 gram) and (Tego Rad 2500, Tego Chemie) (0.2%) were added. Thereafter, solvent-free, non-ionic surfactant/dispersant (Surfynol CT-131, Air Products) (0.6 gram) was added. Epoxidised soya bean oil acrylate (CNN 111, Cray Valley) (5 grams), aliphatic urethane diacrylate (Ebecryl 4830, UCB Chemicals) (18 grams) and fatty acid modified hexafunctional polyester acrylate (Ebecryl 2870, UCB Chemicals) (2 grams) were added in turn to the mixture. The mixture was de-aerated under vacuum and filtered over a 0.6 micrometer membrane filter. An Xaar (126) print-head was used with the resulting UV curable ink jet ink.

An image was printed onto the coated, retro-reflective sheet material prepared in accordance with Example 2b.

The ink described above had a viscosity of 21 cPs and a surface tension of 30 dynes/cm. The printed image was evaluated for adhesion to the coated, retro-reflective sheet.

The printed image showed excellent adhesion and was flexible enough on thin synthetic material. No breaking occurred at a bend of 40°. The sharpness and herewith details of the image showed no inefficiencies. When looking closer to the printed images, the smoothness of the surfaces from the printed images showed no significant differences. The hardness and scratch resistance were good (finger nails).

After lamination to a transparent sheet of PMMA, the sign was immersed in a water bath at 293 K for a month. After this treatment, the printed images showed no lack of quality compared to a printed image that had not been immersed in a water bath.

### EXAMPLE 4A (for organic solvent-based ink)

In a brown beaker glass, black pigment 7 (Microlith black C-K, Ciba-Geigy) (3 grams) was dissolved in a solvent mixture (66.6 grams of 13.8% Triethylene glycol diacrylate (TIEGDA) (SR 272, Cray Valley), 36.4% Isobornyl acrylate (IBOA, UCB Chemicals), and 21.0%, 1,6-Hexanediol diacrylate (HDDA) (SR 238, Cray Valley). The mixture was continuously stirred at low speed. Thereafter, solvent-free 100% active cross-linking additive (Tego-Rad 2200, Tego Chemie) (5 gram) and (Tego Rad 2500, Tego Chemie) (0.2%) were added. Thereafter, solvent-free, non-ionic surfactant/dispersant (Surfynol CT-131, Air Products) (0.6 gram) was added. Epoxidised soya bean oil acrylate (CNN 111, Cray Valley) (5 grams), aliphatic urethane diacrylate (Ebecryl 4830, UCB Chemicals) (18 grams) and fatty acid modified hexafunctional polyester acrylate (Ebecryl 2870, UCB Chemicals) (2 grams) were added in turn to the mixture. In contrast to Example 4, finally 2-benzyl-2-diethylamino-1-[4-morpholinophenyl]-butenone-1 (Irgacure 369, Ciba-Geigy) (4 grams) was added.

The mixture was de-aerated under vacuum and filtered over a 0.6 micrometer membrane filter. An HP cartridge 51645A was used with the resulting UV curable ink jet ink.

An image was printed onto the coated, retro-reflective sheet material prepared in accordance with Example 1.

The ink described above had a viscosity of 21 cPs and a surface tension of 30 dynes/cm. The printed image was evaluated for adhesion to the coated, retro-reflective sheet.

The printed image showed excellent adhesion and was flexible enough on thin synthetic material. No breaking occurred at a bend of 40°. The sharpness and herewith details of the image showed no inefficiencies. When looking closer to the printed images, the smoothness of the surfaces from the printed images showed no significant differences. The hardness and scratch resistance were good (finger nails).

After lamination to a transparent sheet of PMMA, the sign was immersed in a water bath at 293 K for a month. After this treatment, the printed images showed no lack of quality compared to a printed image that had not been immersed in a water bath.

### EXAMPLE 5 (Receiver Coating for oil-based ink)

In a glass beaker, 380 parts of gasoline (boiling point range 100 - 140°C) and 20 parts of white spirit (boiling point range 155 - 195°C) were mechanically stirred and slowly 100 parts of styrene-butadiene-styrene thermoplastic rubber pellets were added. This mixture was stirred thoroughly for several hours until all styrene-butadiene-styrene thermoplastic pellets had dissolved and a light yellowish clear solution had formed. In another glass beaker, 30 parts of cycloaliphatic di-epoxide, 10 parts of modified cycloaliphatic epoxide and 3 parts of triaryl sulphonium hexafluorophosphate salts in propylene carbonate were mixed. From this mixture 5 parts were added to 45 parts of the styrene-butadiene-styrene thermoplastic solution and finally 10 parts propyleneglycol methylether were mixed with the aid of a mechanical stirrer. Thereafter additionally 2 parts of a cationic photo initiator of triaryl sulphonium hexafluorophosphate salts in propylene carbonate were added and the mixture was thoroughly mixed. With this solution, a drawdown was done onto an acrylic plate (thickness 2,9 mm, 110 mm width, 520 mm length) with a wire bar. Thereafter the coating was dried for 15 minutes at a temperature of 100°C. Finally, the coated acrylic plate was cured under an UV lamp. The cured coating had a thickness of 14 microns. The test images/text were printed with a digital print head and pigmented black oil based ink (180 dpi, printing speed 0.5 m/sec).

The printed text was dry almost instantly. The printed text showed good flow behaviour with good intense black coloured image/text despite the printed density of 180 dpi. The coating was slightly flexible but with a hard surface and good adhesion to the surface of the acrylic plate. There was no static electricity nor was there surface tension of any influence. The coating with images/text was waterproof even after immersing in a water bath for 24 hours at room temperature. The plates were tested in the water bath uncovered and laminated. This coating layer showed also good adhesion on other synthetic materials and reflection foils.

### EXAMPLE 6 (for photo-initiator-free ink). (Room temperature (ambient) curable system)

In a glass beaker 380 parts of gasoline (boiling point 100-140°C) and 20 parts of white spirit (boiling point range 155-195°C) were mechanically stirred and slowly 100 parts of styrene-butadiene-styrene thermoplastic rubber pellets were added. This mixture was stirred thoroughly for several hours until all styrene-butadiene-styrene thermoplastic pellets had dissolved and a light yellowish clear solution had formed. In another glass beaker 30 parts of cycloaliphatic diepoxide, 10 parts of modified cycloaliphatic epoxide and 3 parts of triaryl sulphonium hexafluorophosphate salts in propylene carbonate were mixed. From this mixture 5 parts were added to 45 parts of the styrene-butadiene-styrene thermoplastic solution and finally 10 parts propyleneglycol methylether were mixed with the aid of a mechanical stirrer. Thereafter, additionally 2 parts of a cationic photo initiator of triaryl sulphonium hexafluorophosphate salts in propylene carbonate were added with 5 parts benzoyl peroxide. The mixture was thoroughly mixed.

With this solution, a drawdown was done onto an acrylic plate (thickness 2.9mm and 110mm width, 520mm length) with a wine bar. Thereafter the coating was dried for 15 minutes at a temperature of 100°C. Finally, the coated acrylic plate was cured under an UV lamp. The cured coating had a thickness of 14 microns.

The test images/text were printed with a digital print head filled with an inkjet ink having the following composition:
14 parts Isobornyl acrylate SR506 (Cray Valley)
10 parts Propoxylated neopentyl glycol diacrylate SR903
8 parts Ethoxylated trimethylolpropane triacrylate SR454
4 parts Dipentaerythritol pentaacrylate SR399
1 part Sudan Blue 670 (BASF)
1 part Cobalt naphtenate (accelerator)

Copies showed excellent resolution and colour density and were essentially free from puddling. The printed surface was protected by laminating to a transparent sheet of PMMS using a double-sided transparent adhesive tape. After immersing in a water bath of 293K for 48 hours, the images were still present on the coating. The images showed only very little or no colour changes compared with the images printed without immersing in a water bath.

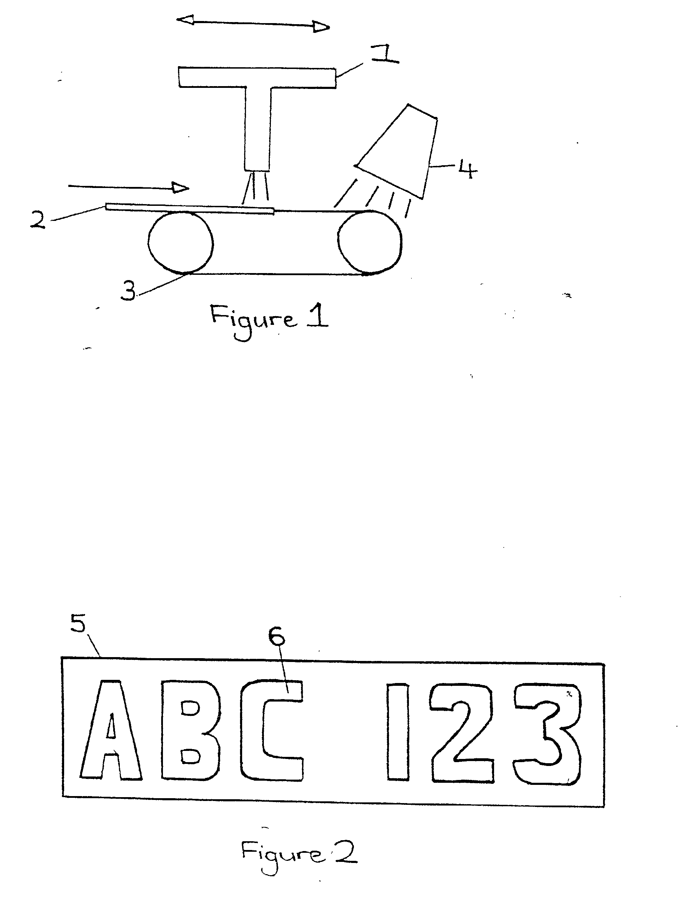

As depicted in Figure 1, the inkjet ink formulation is applied to the coated retro-reflective substrate 2 by an inkjet printing head 1 under computer control. The substrate may travel on a conveyor or on an x-y positioning table 3 to allow it to be positioned beneath the print head. Alternatively, the substrate may be provided in web form and be passed beneath the print head in a continuous "roll-to-roll" feed. This is particularly useful for producing series of outdoor signs to a standard format, e.g. for producing vehicle registration plates.

The printed substrate then passes under a dryer such as a light source, e.g. an UV lamp 4, to activate the photo initiator and initiate cross-linking.

The cured printed substrate is then passed to a laminating station comprising means for laminating the first face of the substrate with at least one transparent acrylic sheet.

A further alternative embodiment of the apparatus includes means for providing a substrate in web form to the printing area under the print head, and means for cutting the web into members of predetermined size. The cutting means may usefully be rotary cutters, cross cutters, or other cutting means suitable for the purpose.

Figure 2 shows an example of an outdoor sign 5 printed with indicia 6, produced in accordance with the invention.

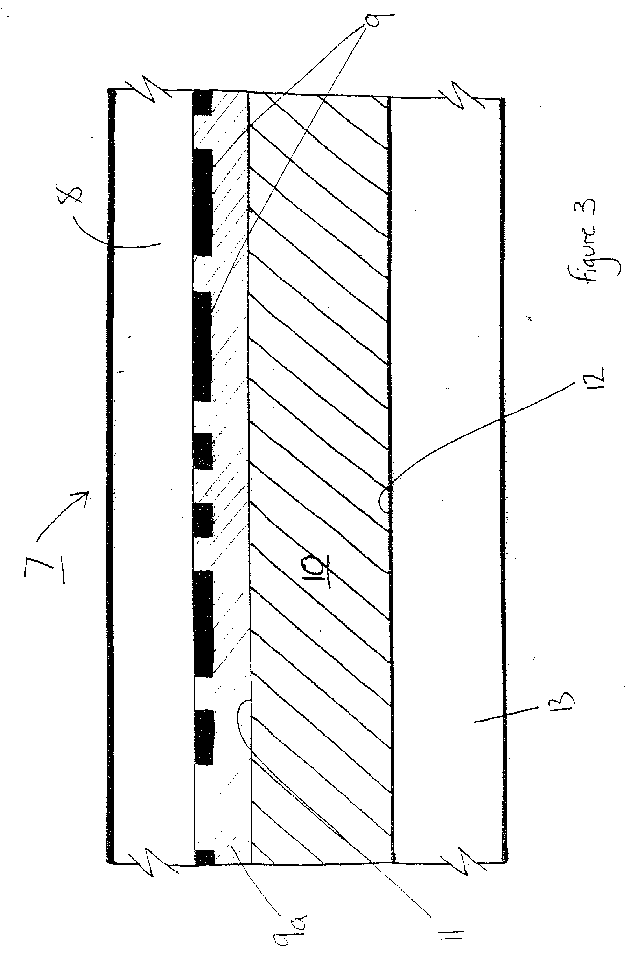

A preferred embodiment of a sign produced in accordance with one aspect of the present invention is shown in schematic cross-section in Figure 3. The sign 7 includes a light-transmitting laminated protective layer 8, such as an acrylic sheet, typically of 2 to 5 mm thickness, suitably between 2.8 and 3.5mm. It overlies a discontinuous image layer 9 formed in a printing ink, the indicia forming the image being absorbed into an ink-receptive receiving layer 9a. Typically, there will be an adhesive layer (not shown) intermediate the protective layer 8 and the ink-receptive receiving layer 9a, although those skilled in the art will have no difficulty in devising other arrangements for bonding a transparent layer to a receiving layer. The ink-receptive receiving layer is coated onto a retro-reflective substrate layer 10, having a first face 11 and a second face 12. The second face is shown fixed to a support substrate 13, typically be means of an intermediate adhesive layer (not shown) giving rigidity to the sign and may typically be an aluminium or ABS plate, or a panel such as a bumper of a vehicle.

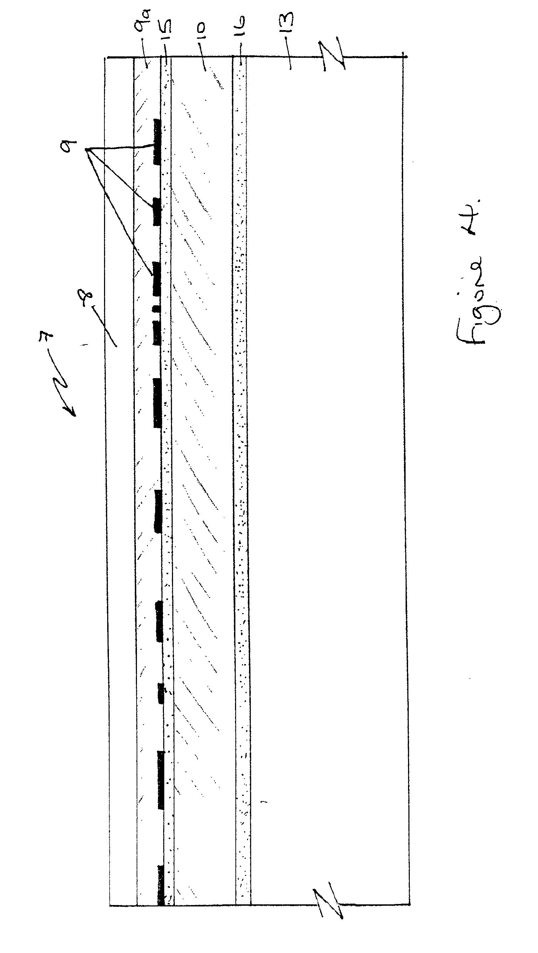

An alternative embodiment is illustrated in cross-section in Figure 4. In this embodiment, the light-transmitting protective layer 8 is formed from polyester sheet, typically of 30 to 150 microns thickness and has the ink-receptive receiving layer 9a formed thereon prior to formation of the discontinuous image layer 9 thereon. A retro-reflective layer 10 is then bonded onto the ink-receptive receiving layer 9a by means of a first adhesive layer 15. A second adhesive layer 16 provided on the reverse face of the retro-reflective layer 10 allows bonding of the sign to a suitable support substrate 13 as described above.

## Claims

1. A method of producing signs for outdoor use, the method comprising:
providing a substrate having a first, retro-reflective, face suitable for receiving printed indicia and a second face suitable for fixing to a support surface;
forming an ink-receptive receiving surface on said first face, said surface being absorbent towards ink used for printing said indicia;
forming indicia on said coating by printing on said surface;
causing the ink to cure or dry; and
laminating the printed first face with at least one light-transmissive layer.

2. A method for producing signs for outdoor use in which indicia are printed in an ink, the method comprising:
providing a substrate having a first, retro-reflective face and a second face suitable for fixing to a support surface;
providing a transparent layer and forming on said layer an ink-receptive receiving surface which is absorbent towards the ink used for printing the indicia;
printing the indicia on the receiving surface, and laminating the transparent layer to the first face of the substrate so that the printed indicia are disposed between the substrate and the transparent layer.

3. A method according to claim 1 or claim 2 wherein the ink-receptive surface is formed by the step of depositing an ink-receptive coating.

4. A method as claimed in any one of claims 1 to 3 wherein the receiving surface contains one or more peroxides or curing agents reactable with the ink.

5. A method according to any one of claims 1 to 3 whereein the ink is a UV curable ink and contains no photoinitiator.

6. A method according to claim 1 or claim 2 wherein the ink receiving surface is formed by a surface treatment to be said substrate.

7. A method as claimed in claim 6 wherein the surface treatment is a flame or corona discharge treatment.

8. A method according to any one of claims 1 to 7 wherein the indicia are printed using an inkjet printing head.

9. A method according to any one of claims 1 to 8, wherein the substrate is provided in web form, and the method further comprises providing means for cutting the web to form signs of predetermined size.

10. A method according to claim 8 or 9 wherein the inkjet printing head is computer-controlled.

11. A method according to any one of the preceding claims wherein the ink-receptive surface is absorbent towards at least some of the components of the ink, such that the printed indicia are absorbed into the surface and the exposed surface of the indicia is substantially coplanar with the surface of the surrounding ink-receptive surface.

12. A method according to any one of the preceding claims wherein the ink-receptive surface has a tacky surface, or is rendered tacky by application of a tackifying agent, the tacky surface serving to bond the substrate to the film layer.

13. A method as claimed in any preceding claim wherein the ink is an oil-based ink or a UV-curable ink.

14. A sign for outdoor use comprising a substrate having a first, retro-reflective face and a second face suitable for fixing to a support surface, said first face carrying printed indicia formed by printing an ink onto an ink-receptive receiving surface and said substrate being laminated to a light-transmissive layer with the indicia disposed between the substrate and the light-transmissive layer, the ink-receptive surface having absorbed the ink which forms the indicia into the surface.

15. A sign as claimed in claim 14 wherein the ink-receptive receiving surface is formed by an ink-receptive coating.

16. A sign as claimed in claim 14 wherein the ink receiving surface is formed by a surface treatment to said substrate.

17. A sign as claimed in claim 16 wherein the surface treatment is a flame or corona discharge treatment.

18. A sign according to claim 15 wherein the ink-receptive coating comprises a polymer which is absorbent towards pigments, dyes and/or solvent employed in the ink.

19. A sign according to claim 18 wherein the ink-receptive coating comprises a radiation-curable binder material.

20. A sign according to claim 18 or 19 wherein the polymer which is absorbent towards pigments, dyes and/or solvent employed in the ink comprises a polyvinyl pyrrolidone.

21. A sign according to any one of claims 14 to 20 wherein the ink is an oil-based ink or a UV-curable ink.
